(19) **Europäisches Patentamt European Patent Office Office européen des brevets**

(11) **EP 2 064 081 B1**

(12) **EUROPÄISCHE PATENTSCHRIFT**

(45) Veröffentlichungstag und Bekanntmachung des Hinweises auf die Patenterteilung:
**24.11.2010 Patentblatt 2010/47**

(51) Int Cl.:
***B60K 1/00*** *(2006.01)* ***B60K 6/52*** *(2007.10)*

(21) Anmeldenummer: **07802139.1**

(22) Anmeldetag: **05.09.2007**

(86) Internationale Anmeldenummer:
**PCT/EP2007/007732**

(87) Internationale Veröffentlichungsnummer:
**WO 2008/034520 (27.03.2008 Gazette 2008/13)**

(54) **ELEKTRISCHE ACHSANTRIEBSBAUGRUPPE**

ELECTRIC DRIVE AXLE ASSEMBLY

MODULE D'ENTRAÎNEMENT D'ESSIEU ÉLECTRIQUE

(84) Benannte Vertragsstaaten:
**DE FR IT**

(30) Priorität: **22.09.2006 DE 102006046419**

(43) Veröffentlichungstag der Anmeldung:
**03.06.2009 Patentblatt 2009/23**

(73) Patentinhaber: **GETRAG Getriebe- und Zahnradfabrik Hermann Hagenmeyer GmbH & Cie KG 74199 Untergruppenbach (DE)**

(72) Erfinder:
• **KNOBLAUCH, Daniel 74199 Untergruppenbach (DE)**
• **KREIM, Alexander 74626 Bretzfeld-Waldbach (DE)**
• **KNOEDEL, Ulrich 74379 Ingersheim (DE)**

(74) Vertreter: **Steil, Christian et al Witte, Weller & Partner Postfach 10 54 62 70047 Stuttgart (DE)**

(56) Entgegenhaltungen:
**WO-A-2007/018958 DE-A1- 10 315 210
DE-A1- 19 524 524 DE-A1- 19 841 159**

**Beschreibung**

Die vorliegende Erfindung betrifft eine elektrische Achsantriebsbaugruppe für eine Achse eines Fahrzeugs, mit einer elektrischen Maschine, deren Abtrieb mit dem Eingang einer Übersetzungseinrichtung verbindbar ist, und mit einem Differentialgetriebe, dessen Eingangsglied mit einem Ausgang der Übersetzungseinrichtung verbunden ist, und dessen Ausgangsglieder mit einer linken bzw. einer rechten Antriebswelle der Achse verbindbar sind.

Eine derartige elektrische Achsantriebsbaugruppe ist dazu geeignet, eine Achse eines Fahrzeugs anzutreiben. Generell ist es denkbar, dass eine solche elektrische Achsantriebsbaugruppe den alleinigen Antrieb für das Fahrzeug darstellt. Besonders bevorzugt ist jedoch eine Anwendung, bei der eine Achse des Fahrzeugs herkömmlich angetrieben ist, bspw. durch einen Verbrennungsmotor oder einen Hybridantrieb. Die andere Achse des Fahrzeugs wird von der gattungsgemäßen elektrischen Achsantriebsbaugruppe angetrieben.

DE 195 24 524 Al offenbart eine elektrische Achsantriebsbaugruppe für eine Achse eines Fahrzeugs, mit einer elektrischen Maschine, mit einer Übersetzungseinrichtung und mit einem Differentialgetriebe, dessen Ausgangsglieder mit einer linken bzw. einer rechten Antriebswelle der Achse verbindbar sind, wobei wenigstens eine Übersetzungsstufe der Übersetzungseinrichtung und das Differentialgetriebe in Achsrichtung auf entgegengesetzten Seiten der elektrischen Maschine angeordnet sind.

Es ist die Aufgabe der Erfindung, eine verbesserte gattungsgemäße elektrische Achsantriebsbaugruppe anzugeben.

Diese Aufgabe wird durch eine elektrische Achsantriebsbaugruppe gemäß Anspruch 1 gelöst, wobei wenigstens eine Übersetzungsstufe der Übersetzungseinrichtung und das Differentialgetriebe in Achsrichtung auf entgegengesetzten Seiten der elektrischen Maschine angeordnet sind und wobei das Differentialgetriebe über eine Hohlwelle mit der Übersetzungsstufe verbunden ist.

Eine derartige elektrische Achsantriebsbaugruppe ermöglicht eine gute Ausnutzung des in der Regel zur Verfügung stehenden Bauraumes, wobei dieser in der Mitte generell größer ist und zur Seite (zu den Rädern) hin generell kleiner wird. Durch die Anordnung der Übersetzungsstufe auf der einen Seite der elektrischen Maschine und die Anordnung des Differentialgetriebes auf der anderen Seite der elektrischen Maschine kann die elektrische Maschine zentral angeordnet werden. Wegen des zur Verfügung stehenden Bauraumes kann eine relativ große elektrische Maschine verwendet werden.

Die Aufgabe wird somit vollkommen gelöst.

Von besonderem Vorteil ist es, wenn die elektrische Maschine koaxial zu der Achse angeordnet ist, wobei die Hohlwelle durch einen Rotor der elektrischen Maschine hindurch verläuft.

Auf diese Weise kann der Bauraum in optimaler Weise ausgenutzt werden.

Gemäß einem weiteren Aspekt der vorliegenden Erfindung, der unabhängig von der Anordnung der Übersetzungsstufe und des Differentialgetriebes in Bezug auf die elektrische Maschine eine eigene Erfindung darstellt, weist die Übersetzungseinrichtung wenigstens zwei Übersetzungsstufen auf.

Auf diese Weise kann die Achsantriebsbaugruppe mit einer relativ hohen Spreizung realisiert werden, so dass die Achsantriebsbaugruppe in einer großen Anzahl von Fahrsituationen optimal verwendbar ist.

Dabei ist es von besonderem Vorteil, wenn eine erste Übersetzungsstufe eine Stimradstufenanordnung mit einer Vorgelegewelle ist, die parallel zu der Achse angeordnet ist.

Eine Stimradstufenanordnung benötigt zwar auf Grund der Vorgelegewelle einen gewissen Bauraum in radialer Richtung. Andererseits ermöglicht eine solche Stimradstufenanordnung eine konstruktive vergleichsweise einfache Möglichkeit, die Übersetzungsstufen zu schalten. Die Stirnradstufenanordnung beinhaltet vorzugsweise zwei Stimradstufen.

Besonders bevorzugt ist es hierbei, wenn die erste Übersetzungsstufe (Stimradstufenanordnung) in Achsrichtung auf der dem Differentialgetriebe entgegengesetzten Seite der elektrischen Maschine angeordnet ist.

Auf diese Weise ist es möglich, die Stirnradstufenanordnung und das Differentialgetriebe bauraumoptimiert unterzubringen.

Wie oben erwähnt, ist es von besonderem Vorteil, wenn die Übersetzungsstufen mittels einer Schalteinrichtung anwählbar sind.

Auf diese Weise kann eine große Spreizung realisiert werden.

Dabei ist es besonders bevorzugt, wenn die Schalteinrichtung auf der dem Differentialgetriebe entgegengesetzten Seite der elektrischen Maschine angeordnet ist.

Auch dies führt zu einer optimalen Bauraumausnutzung.

Gemäß einer weiteren bevorzugten Ausführungsform ist eine zweite Übersetzungsstufe in Achsrichtung auf der gleichen Seite wie das Differentialgetriebe angeordnet.

Insbesondere dann, wenn die Schalteinrichtung auf der anderen Seite angeordnet ist, ergibt sich so eine nochmals optimierte Bauraumausnutzung.

Gemäß einer weiteren Ausführungsform ist die Schalteinrichtung dazu ausgelegt, alternativ eine der Übersetzungsstufen oder wenigstens zwei der Übersetzungsstufen in Reihe in den Leistungsfluss zu schalten.

Bei dieser Ausführungsform wird die Antriebsleistung der elektrischen Maschine in der einen Schaltstellung über eine der Übersetzungsstufen übersetzt. Daher kann in dieser einen Betriebsart bereits eine erhebliche Drehzahlreduktion erzielt werden, so dass eine hochdrehende elektrische Maschine verwendbar ist. In der anderen Schaltstellung werden wenigstens zwei der Übersetzungsstufen (vorzugsweise die eine Übersetzungsstufe und eine zweite Übersetzungsstufe) in Reihe in den Leistungsfluss geschaltet. Hierdurch werden die Übersetzungsverhältnisse miteinander multipliziert, was zu einer hohen Spreizung beiträgt.

Es ist ferner besonders vorteilhaft, wenn eine erste Übersetzungsstufe eine Stirnradstufenanordnung mit einer Vorgelegewelle ist, die parallel zu der Achse angeordnet ist, wobei die Schalteinrichtung der Stirnradstufenanordnung zugeordnet ist.

Da sich eine Stirnradstufenanordnung auf Grund der vorhandenen Vorgelegewelle in der Regel einfacher schalten lässt (wie bei einem manuellen Schaltgetriebe), ist es bevorzugt, wenn die Schalteinrichtung dieser Übersetzungsstufe zugeordnet ist.

Gemäß einer weiteren bevorzugten Ausführungsform ist die Schalteinrichtung eine elektromagnetische Schalteinrichtung.

Dies ermöglicht es, die elektrische Achsantriebsbaugruppe ohne hydraulische oder sonstige aufwändige Schaltaktuatorik zu realisieren. Insbesondere entfällt eine aufwändige Verkabelung. Dies gilt auch für sonstige elektrische Schaltaktuatoriken, wie z.B. Schaltwalzen. Dort ist jedoch der Bauraumbedarf in der Regel etwas größer.

Ferner ist es besonders bevorzugt, wenn die Schalteinrichtung eine Neutralstellung aufweist, in der die Übersetzungseinrichtung von der elektrischen Maschine entkoppelt ist.

Hierdurch existiert eine Sicherheit beim Versagen der Leistungselektronik. Ferner ist ein Abkuppeln der Antriebseinheit vom Abtrieb möglich. Bezogen auf die Antriebsräder lassen sich dadurch die Massenträgheitsmomente reduzieren, was sich u.a. positiv bei Bremsvorgängen mit ABS-Regelung oder Fahrzuständen mit ESP-Regelung auswirken kann.

Gemäß einer alternativen Ausführungsform weist die Übersetzungseinrichtung nur eine einzelne Übersetzungsstufe auf.

Bei dieser Ausführungsform lässt sich die Achsantriebsbaugruppe mit wenigen Bauteilen realisieren. Die Leistung der elektrischen Maschine wird immer über die einzelne Übersetzungsstufe auf das Differentialgetriebe übertragen.

Insgesamt ist es ferner bevorzugt, wenn die elektrische Maschine, die Übersetzungseinrichtung und das Differentialgetriebe an einem gemeinsamen Träger (z.B. einer gemeinsamen Gehäuseanordnung) festgelegt sind, der an einer Fahrzeugkarosserie festlegbar ist.

Auf diese Weise kann die elektrische Achsantriebsbaugruppe als eine vormontierte Einheit bereitgestellt werden.

Ferner ist es vorteilhaft, wenn das Differentialgetriebe ein Planetenraddifferential aufweist.

Hierdurch kann axialer Bauraum eingespart werden.

Generell ermöglichen erfindungsgemäße elektrische Achsantriebsbaugruppen folgende Funktionsweise. Bei der bevorzugten Anwendung als Antrieb für eine zweite Achse eines Fahrzeugs, dessen erste Achse herkömmlich angetrieben ist, lassen sich verschiedene Betriebsarten realisieren. Bspw. kann das Fahrzeug alleine mittels der elektrischen Achsantriebsbaugruppe angetrieben werden (z.B. beim Rangieren oder beim Anfahren). Zum anderen kann die Antriebsleistung des herkömmlichen Motors an der einen Achse mit der Antriebsleistung der erfindungsgemäßen Achsantriebsbaugruppe über die Straße summiert werden ("through the road"). Ferner ist auch eine Rekuperation möglich.

Ein Fahrzeug mit einer derartig implementierten Achsantriebsbaugruppe benötigt keine Kardanwelle. Es ergibt sich nur ein geringer Verkabelungsaufwand, da die notwendige Leistungselektronik und der Energiespeicher ebenfalls im Bereich jener Achse angeordnet werden können, der die elektrische Achsantriebsbaugruppe zugeordnet ist.

Ferner vergrößert eine derartige Achsantriebsbaugruppe nicht die ungefederte (reifengefederte) Masse (wie dies bspw. bei Radnabenmotoren der Fall ist) und wirkt sich somit nicht nachteilig auf das Fahrverhalten aus.

Im Vergleich zu vollständig dezentralen Antrieben (z.B. Radnabenmotoren) ergeben sich ein geringerer Verkabelungsaufwand und somit weniger EMV-Probleme.

Auch lässt sich eine (Wasser-)Kühlung deutlich einfacher realisieren als bei solchen dezentralen Antrieben.

Das verwendete Differentialgetriebe kann ein mechanisches Differentialgetriebe sein, das die Antriebsleistung in an sich herkömmlicher Weise auf die Antriebswellen verteilt, kann jedoch auch zwei getrennt ansteuerbare Kupplungen (Reibkupplungen) aufweisen. Im letzteren Fall kann eine "active yaw" Steuerung realisiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1　eine schematische Draufsicht auf ein Kraftfahrzeug mit einer erfindungsgemä- ßen elektrischen Achsantriebseinrichtung;

Fig. 2　eine schematische Schnittdarstellung einer elektrischen Achsantriebsbaugrup- pe gemäß einer weiteren Ausführungsform der vorliegenden Erfindung; und

Fig. 3 eine weitere schematische Schnittansicht einer erfindungsgemäßen Achsan- triebsbaugruppe.

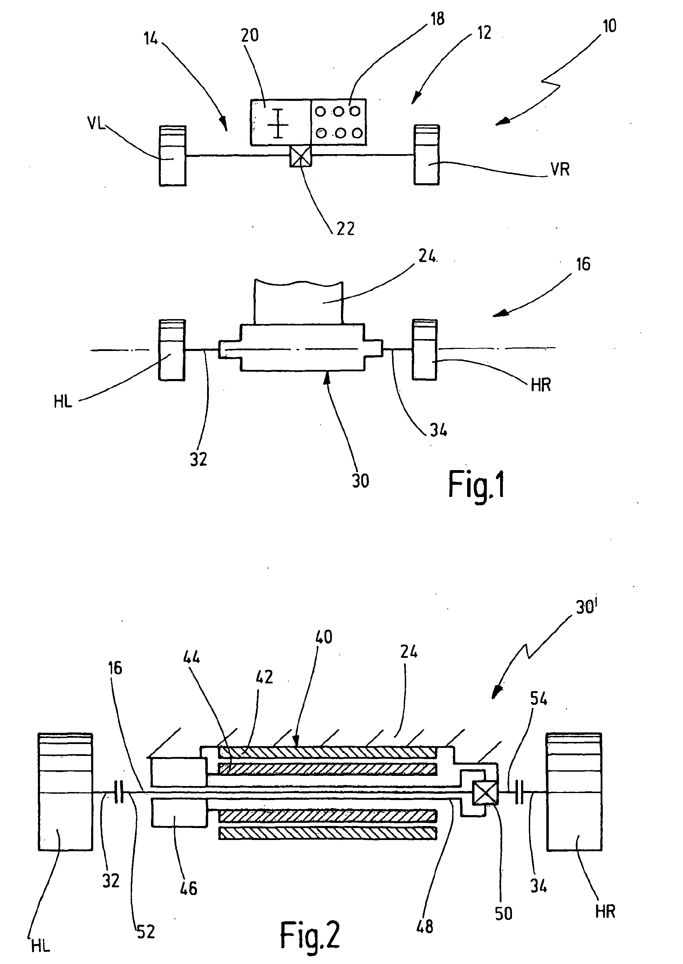

In Fig. 1 ist ein Fahrzeug (wie ein Personenkraftwagen) generell mit 10 bezeichnet.

Das Fahrzeug 10 weist einen Antriebsstrang 12 auf, der eine erste angetriebene Achse 14 (im vorliegenden Fall Vorderachse mit Vorderrädern VL, VR) und eine zweite angetriebene Achse 16 (im vorliegenden Fall Hinterachse mit linkem Hinterrad HL und rechtem Hinterrad HR) aufweist.

Im Bereich der ersten angetriebenen Achse 14 ist ein Verbrennungsmotor 18 vorgesehen, dessen Ausgangsleistung auf ein Getriebe, wie ein manuelles Schaltgetriebe, ein automatisiertes Schaltgetriebe, ein Doppelkupplungsgetriebe, ein Wandler-Automatgetriebe, etc., gegeben wird. Der Ausgang des Getriebes 20 ist mit einem Differential 22 verbunden, das die Antriebsleistung des Verbrennungsmotors 18 auf die Vorderräder VL, VR verteilt.

Es versteht sich, dass in der Antriebseinheit 18, 20 auch ein elektrischer Motor zur Hybridisierung aufgenommen sein kann.

Ein Chassis bzw. Fahrgestell des Kraftfahrzeugs 10 ist in Fig. 1 schematisch mit 24 bezeichnet. Man erkennt, dass sich zwischen den Achsen 14, 16 keine Kardanwelle erstreckt.

Die zweite angetriebene Achse 16 wird von einer Achsantriebsbaugruppe 30 angetrieben, die eine elektrische Maschine beinhaltet. Die Antriebsleistung der elektrischen Maschine wird mittels der Achsantriebsbaugruppe 30 auf eine linke Antriebswelle 32 bzw. eine rechte Antriebswelle 34 übertragen, die mit den Hinterrädern HL bzw. HR verbunden sind.

In Fig. 2 ist eine erste Ausführungsform einer erfindungsgemäßen elektrischen Achsantriebsbaugruppe generell mit 30' bezeichnet.

Die Achsantriebsbaugruppe 30' weist eine elektrische Maschine 40 mit einem Stator 42 und einem Rotor 44 auf. Die elektrische Maschine 40 ist koaxial zu der zweiten angetriebenen Achse 16 angeordnet. Der Stator 42 ist an dem Chassis 24 festgelegt.

Die Achsantriebsbaugruppe 30' weist ferner eine Übersetzungseinrichtung 46 auf, deren Eingangsglied mit dem Rotor 44 verbunden ist. Die Übersetzungseinrichtung 46 ist in seitlicher Richtung benachbart zu der elektrischen Maschine 40 angeordnet.

Auf der entgegengesetzten Seite der elektrischen Maschine 40 ist ein Differentialgetriebe 50 angeordnet, dessen Eingangsglied über eine Hohlwelle 48 mit dem Ausgang der Übersetzungseinrichtung 46 verbunden ist. Die Hohlwelle 48 erstreckt sich durch den Rotor 44 der elektrischen Maschine 40 hindurch.

Das Differentialgetriebe 50 kann ein herkömmliches mechanisches Differentialgetriebe wie ein Kegelraddifferential sein, das die Antriebsleistung der elektrischen Maschine 40 auf ein linkes Ausgangsglied 52 und ein rechtes Ausgangsglied 54 verteilt. Die Ausgangsglieder 52, 54 sind mit den Antriebswellen 32, 34 verbindbar.

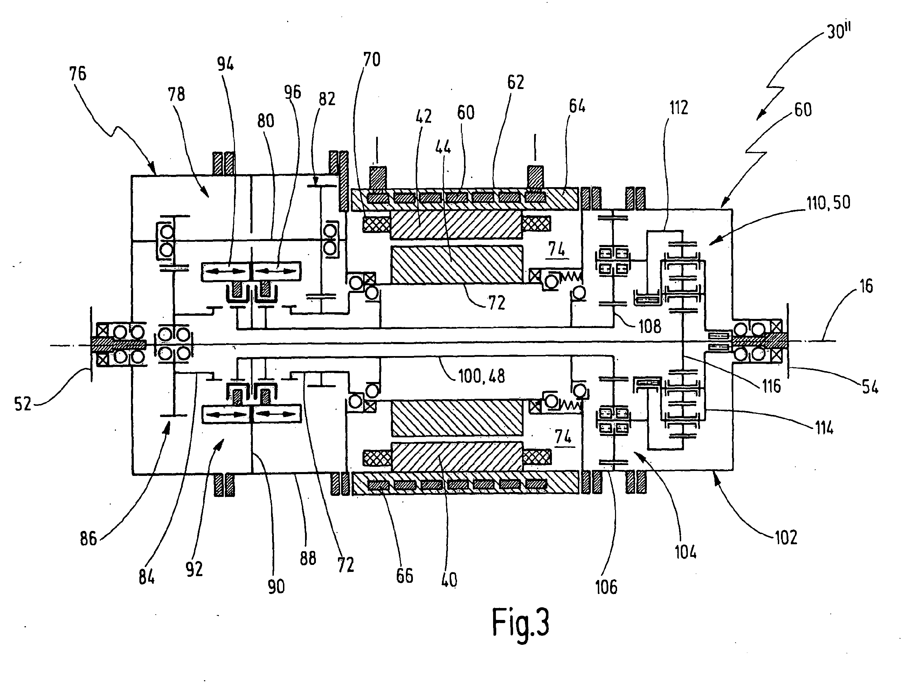

Fig. 3 zeigt eine weitere bevorzugte Ausführungsform einer erfindungsgemäßen elektrischen Achsantriebsbaugruppe 30".

Die Achsantriebsbaugruppe 30" entspricht hinsichtlich Aufbau und Funktionsweise generell den zuvor beschriebenen Achsantriebsbaugruppen. Im Folgenden wird lediglich auf Unterschiede eingegangen. Gleiche Elemente sind mit gleichen Bezugsziffern versehen.

Die Achsantriebsbaugruppe 30" weist eine Gehäuseanordnung 60 auf, an der die elektrische Maschine 40, das Differentialgetriebe 50 sowie eine Übersetzungseinrichtung festgelegt und darin untergebracht sind, die nachstehend näher erläutert werden wird.

Die Gehäuseanordnung 60 weist ein etwa zylindrisch ausgebildetes Motorgehäuse 62 auf, das einen Kühlmantel 64 mit Kühlkanälen 66 zur Fluidkühlung (bspw. Wasserkühlung) beinhaltet und an dem der Stator 42 festgelegt ist. Das Motorgehäuse 62 umgibt die elektrische Maschine 40.

Bei 70 ist eine Statorwicklung des Stators 42 gezeigt. Eine Motorwelle, die mit dem Rotor verbunden ist, ist bei 72 gezeigt. Das Motorgehäuse 62 weist einen Motorraum 74 zur Aufnahme der elektrische Maschine 40 auf, der gegenüber der restlichen Gehäuseanordnung 60 durch geeignete Dichtungen (Wellendichtungen) abgedichtet ist.

Die Gehäuseanordnung 60 weist ferner einen ersten Gehäusedeckel 76 auf, der in axialer Richtung (seitlich) an das Motorgehäuse 62 angeflanscht ist und eine erste Übersetzungsstufe 78 in Form einer Stirnradstufe der Übersetzungseinrichtung 46 aufnimmt.

Die erste Übersetzungsstufe 78 beinhaltet eine Stirnradstufenanordnung mit zwei Stirnradstufen und einer Vorgelegewelle 80, die parallel zu der Achse 16 angeordnet ist. So beinhaltet die erste Übersetzungsstufe 78 einen ersten Radsatz 82 in Form eines Konstanten-Radsatzes, der zwischen dem Rotor 44 und der Vorgelegewelle 80 eine erste Übersetzung (vorzugsweise größer als 1 wie $\sqrt{2}$) realisiert. Eine Ausgangswelle 84 der ersten Übersetzungsstufe 78 ist koaxial zu der Achse 16 angeordnet und ist über einen zweiten Radsatz 86 mit der Vorgelegewelle 80 verbunden. Der zweite Radsatz 86 richtet eine feste zweite Übersetzung (bspw. $\sqrt{2}$) ein.

Zwischen dem ersten Gehäusedeckel 76 und dem Motorgehäuse 62 ist ein Zwischengehäuse 88 koaxial angeordnet, das einen Teil des Gehäusedeckels 76 bilden kann. An dem Zwischengehäuse 88 ist ein Lagerschild 90 ausgebildet, an dem eine Schalteinrichtung 92 festgelegt ist. Die Schalteinrichtung 92 kann eine elektromagnetische Schalteinrichtung sein, kann jedoch auch ein herkömmliches Synchronpaket sein.

Die Schalteinrichtung 92 beinhaltet eine erste Schaltkupplung 94 und eine zweite Schaltkupplung 96. Die erste Schaltkupplung 94 weist eine Neutralposition (in Fig. 3 dargestellt) auf, und eine zweite Position, in der die Ausgangswelle 84 der ersten Übersetzungsstufe 78 mit einer Hohlwelle 100 (entsprechend Hohlwelle 48) verbunden ist, die durch den Rotor 44 hindurch verläuft. Die zweite Schaltkupplung 96 weist eine Neutralstellung (in Fig. 3 gezeigt) und eine zweite Stellung auf, in der eine Motorwelle 72 des Rotors 44 mit der Hohlwelle 100 verbunden ist. Es versteht sich, dass die zwei Schaltkupplungen 94, 96 in der Regel nur alternativ aus ihrer jeweiligen Neutralstellung heraus bewegt werden.

Auf der der elektrischen Maschine 40 gegenüberliegenden Seite ist an dem Motorgehäuse 62 ein zweiter Gehäusedeckel 102 seitlich angeflanscht. Der zweite Gehäusedeckel 102 nimmt eine zweite Übersetzungsstufe 104 in Form eines Planetenradsatzes sowie ein Differentialgetriebe 110 (entsprechend dem Differentialgetriebe 50) auf, das ebenfalls als Planetenradsatz ausgebildet ist.

Dabei ist ein Hohlrad 106 der zweiten Übersetzungsstufe 104 als Gehäuseteil ausgebildet, das zwischen dem zweiten Gehäusedeckel 102 und dem Motorgehäuse 62 festgelegt ist. Ein Sonnenrad 108 der zweiten Übersetzungsstufe 104 ist mit der Hohlwelle 100 verbunden. Ein Planetenträger der zweiten Übersetzungsstufe 104 ist mit einem Eingangsglied des Differentialgetriebes 110 verbunden, genauer gesagt mit dem Hohlrad 112 des Differentialgetriebe 110.

Der Planetenträger 114 des Differentialgetriebes 110 ist mit dem rechten Ausgangsglied 54 verbunden. Das Sonnenrad 116 des Differentialgetriebes 110 ist mit dem linken Ausgangsglied 52 verbunden.

Die Übersetzung der ersten Übersetzungsstufe liegt vorzugsweise im Bereich von 1,3 bis 3, vorzugsweise im Bereich von 1,8 bis 2,5.

Die Übersetzung der zweiten Übersetzungsstufe liegt vorzugsweise im Bereich von 3 bis 8, vorzugsweise im Bereich von 5 bis 7.

Es versteht sich, dass das Differentialgetriebe 110 auch als Kegelradgetriebe ausgebildet sein kann.

Ferner ist es auch denkbar, dass die zweite Übersetzungsstufe 104 ebenfalls auf der dem Differentialgetriebe 110 gegenüberliegenden Seite der elektrischen Maschine 40 angeordnet ist.

Generell ist es auch denkbar, auf eine zweite Übersetzungsstufe 104 komplett zu verzichten, die Hohlwelle 100 also direkt mit einem Eingangsglied des Differentialgetriebes 110 zu verbinden.

Die zweite Übersetzungsstufe 104 ist vorzugsweise als Planetenradsatz ausgebildet, da hierbei eine hohe Übersetzung realisierbar ist und da die zweite Übersetzungsstufe 104 ständig im Leistungsfluss steht, also nicht geschaltet werden muss (das Schalten von Planetenradsätzen ist im Allgemeinen konstruktiv schwieriger zu realisieren).

**Patentansprüche**

1. Elektrische Achsantriebsbaugruppe (30) für eine Achse (16) eines Fahrzeugs (10), mit einer elektrischen Maschine (40), deren Abtrieb mit dem Eingang einer Übersetzungseinrichtung (46; 78) verbindbar ist, und mit einem Differentialgetriebe (50), dessen Eingangsglied (112) mit einem Ausgang der Übersetzungseinrichtung (46; 78) verbunden ist und dessen Ausgangsglieder (52, 54; 116, 114) mit einer linken bzw. einer rechten Antriebswelle (32, 34) der Achse (16) verbindbar sind,

   **dadurch gekennzeichnet, dass**

   wenigstens eine Übersetzungsstufe (78) der Übersetzungseinrichtung (46; 78) und das Differentialgetriebe (50) in Achsrichtung auf entgegengesetzten Seiten der elektrischen Maschine (40) angeordnet sind, wobei das Differentialgetriebe (50) über eine Hohlwelle (48) mit der Übersetzungsstufe (46; 78) verbunden ist.

2. Elektrische Achsantriebsbaugruppe nach Anspruch 1, **dadurch gekennzeichnet, dass** die elektrische Maschine (40) koaxial zu der Achse (16) angeordnet ist, wobei die Hohlwelle (48) durch einen Rotor (44) der elektrischen Maschine (40) hindurch verläuft.

3. Elektrische Achsantriebsbaugruppe nach Anspruch 1 oder 2 oder nach dem Oberbegriff des Anspruchs 1, **dadurch gekennzeichnet, dass** die Übersetzungseinrichtung (46; 78, 104) wenigstens zwei Übersetzungsstufen (78, 104) aufweist.

4. Elektrische Achsantriebsbaugruppe nach Anspruch 3, **dadurch gekennzeichnet, dass** eine erste Übersetzungsstufe (78) eine Stimradstufenanordnung (78) mit einer Vorgelegewelle (80) ist, die parallel zu der Achse (16) angeordnet ist.

5. Elektrische Achsantriebsbaugruppe nach Anspruch 4, **dadurch gekennzeichnet, dass** die erste Übersetzungsstufe (78) in Achsrichtung auf der dem Differentialgetriebe (50) entgegengesetzten Seite der elektrischen Maschine (40) angeordnet ist.

6. Elektrische Achsantriebsbaugruppe nach einem der Ansprüche 3 bis 5, **dadurch gekennzeichnet, dass** die Übersetzungsstufen (78, 104) mittels einer Schalteinrichtung (92) anwählbar sind.

7. Elektrische Achsantriebsbaugruppe nach Anspruch 6, **dadurch gekennzeichnet, dass** die Schalteinrichtung (92) auf der dem Differentialgetriebe (50) entgegengesetzten Seite der elektrischen Maschine (40) angeordnet ist.

8. Elektrische Achsantriebsbaugruppe nach einem der Ansprüche 3 bis 7, **dadurch gekennzeichnet, dass** eine zweite Übersetzungsstufe (104) in Achsrichtung auf der gleichen Seite wie das Differentialgetriebe (50) angeordnet ist.

**9.** Elektrische Achsantriebsbaugruppe nach einem der Ansprüche 6 bis 8, **dadurch gekennzeichnet, dass** die Schalteinrichtung (92) dazu ausgelegt ist, alternativ eine (104) der Übersetzungsstufen (78, 104) oder wenigstens zwei der Übersetzungsstufen in Reihe in den Leistungsfluss zu schalten.

**10.** Elektrische Achsantriebsbaugruppe nach einem der Ansprüche 6 bis 9, **dadurch gekennzeichnet, dass** eine erste Übersetzungsstufe (78) eine Stirnradstufenanordnung (78) mit einer Vorgelegewelle (80) ist, die parallel zu der Achse (16) angeordnet ist, wobei die Schalteinrichtung (92) der Stirnradstufe (78) zugeordnet ist.

**11.** Elektrische Achsantriebsbaugruppe nach einem der Ansprüche 6 bis 10, **dadurch gekennzeichnet, dass** die Schalteinrichtung (92) eine elektromagnetische Schalteinrichtung (92) ist.

**12.** Elektrische Achsantriebsbaugruppe nach einem der Ansprüche 6 bis 11, **dadurch gekennzeichnet, dass** die Schalteinrichtung (92) eine Neutralstellung aufweist, in der die Übersetzungseinrichtung (46; 78, 104) von der elektrischen Maschine (40) entkoppelt ist.

**13.** Elektrische Achsantriebsbaugruppe nach Anspruch 1 oder 2, **dadurch gekennzeichnet, dass** die Übersetzungseinrichtung (46) eine einzelne Übersetzungsstufe (46) aufweist.

**14.** Elektrische Achsantriebsbaugruppe nach einem der Ansprüche 1 bis 13, **dadurch gekennzeichnet, dass** die elektrische Maschine (40), die Übersetzungseinrichtung (46; 78, 104) und das Differentialgetriebe (50) an einem gemeinsamen Träger (60) festgelegt sind, der an einer Fahrzeugkarosserie (24) festlegbar ist.

**15.** Elektrische Achsantriebsbaugruppe nach einem der Ansprüche 1 bis 14, **dadurch gekennzeichnet, dass** das Differentialgetriebe (50) ein Planetenraddifferential aufweist.

**Claims**

**1.** Electric axle drive unit (30) for an axle (16) of a vehicle (10), having an electric machine (40), the drive output of which can be connected to the input of a transmission device (46; 78), and having a differential gear (50), the input member (112) of which is connected to an output of the transmission device (46; 78) and the output members (52, 54; 116, 114) of which can be connected respectively to a left-hand and a right-hand driveshaft (32, 34) of the axle (16), **characterized in that**

at least one transmission stage (78) of the transmission device (46; 78) and the differential gear (50) are arranged on opposite sides of the electric machine (40) in the axial direction, with the differential gear (50) being connected to the transmission stage (46; 78) by means of a hollow shaft (48).

**2.** Electric axle drive unit according to claim 1, **characterized in that** the electric machine (40) is arranged coaxially with respect to the axle (16), with the hollow shaft (48) running through a rotor (44) of the electric machine (40).

**3.** Electric axle drive unit according to claim 1 or 2 or according to the preamble of claim 1, **characterized in that** the transmission device (46; 78, 104) has at least two transmission stages (78, 104).

**4.** Electric axle drive unit according to claim 3, **characterized in that** a first transmission stage (78) is a spur gear stage arrangement (78) with a countershaft (80) which is arranged parallel to the axle (16).

**5.** Electric axle drive unit according to claim 4, **characterized in that** the first transmission stage (78) is arranged on that side of the electric machine (40) which is situated opposite the differential gear (50) in the axial direction.

**6.** Electric axle drive unit according to one of claims 3 to 5, **characterized in that** the transmission stages (78, 104) can be selected by means of a shift device (92).

**7.** Electric axle drive unit according to claim 6, **characterized in that** the shift device (92) is arranged on that side of the electric machine (40) which is situated opposite the differential gear (50).

**8.** Electric axle drive unit according to one of claims 3 to 7, **characterized in that** a second transmission stage (104) is arranged on the same side as the differential gear (50) in the axial direction.

**9.** Electric axle drive unit according to one of claims 6 to 8, **characterized in that** the shift device (92) is designed to alternatively connect one (104) of the transmission stages (78, 104), or at least two of the transmission stages in series, into the power flow.

**10.** Electric axle drive unit according to one of claims 6 to 9, **characterized in that** a first transmission stage (78) is a spur gear stage arrangement (78) with a countershaft (80) which is arranged parallel to the axle (16), with the shift device (92) being assigned to the spur gear stage (78).

**11.** Electric axle drive unit according to one of claims 6 to 10, **characterized in that** the shift device (92) is an electromagnetic shift device (92).

12. Electric axle drive unit according to one of claims 6 to 11, **characterized in that** the shift device (92) has a neutral position in which the transmission device (46; 78, 104) is decoupled from the electric machine (40).

13. Electric axle drive unit according to claim 1 or 2, **characterized in that** the transmission device (46) has a single transmission stage (46).

14. Electric axle drive unit according to one of claims 1 to 13, **characterized in that** the electric machine (40), the transmission device (46; 78, 104) and the differential gear (50) are fixed to a common support (60) which can be fixed to a vehicle body (24).

15. Electric axle drive unit according to one of claims 1 to 14, **characterized in that** the differential gear (50) has a planet-gear differential.


**Revendications**

1. Module électrique d'entraînement d'essieu (30) pour un essieu (16) d'un véhicule (10), avec une machine électrique (40) dont la sortie peut être reliée à l'entrée d'un dispositif de transmission (46; 78), et avec un engrenage différentiel (50), dont l'organe d'entrée (112) est relié à une sortie du dispositif de transmission (46; 78) et dont les organes de sortie (52, 54; 116, 114) peuvent être reliés à un arbre d'entraînement gauche ou droit (32, 34) de l'essieu (16), **caractérisé en ce qu'**au moins un étage de transmission (78) du dispositif de transmission (46; 78) et l'engrenage différentiel (50) sont disposés sur des côtés opposés de la machine électrique (40) dans la direction de l'essieu, dans lequel l'engrenage différentiel (50) est relié à l'étage de transmission (46; 78) au moyen d'un arbre creux (48).

2. Module électrique d'entraînement d'essieu selon la revendication 1, **caractérisé en ce que** la machine électrique (40) est disposée coaxialement à l'essieu (16), dans lequel l'arbre creux (48) s'étend à travers un rotor (44) de la machine électrique (40).

3. Module électrique d'entraînement d'essieu selon la revendication 1 ou 2 ou selon le préambule de la revendication 1, **caractérisé en ce que** le dispositif de transmission (46; 78, 104) comporte au moins deux étages de transmission (78, 104).

4. Module électrique d'entraînement d'essieu selon la revendication 3, **caractérisé en ce qu'**un premier étage de transmission (78) est un agencement d'étages à roues droites (78) avec un arbre intermédiaire (80), qui est disposé parallèlement à l'essieu (16).

5. Module électrique d'entraînement d'essieu selon la revendication 4, **caractérisé en ce que** le premier étage de transmission (78) est disposé sur le côté de la machine électrique (40) situé à l'opposé de l'engrenage différentiel (50), dans la direction de l'essieu.

6. Module électrique d'entraînement d'essieu selon l'une quelconque des revendications 3 à 5, **caractérisé en ce que** les étages de transmission (78, 104) peuvent être sélectionnés au moyen d'un dispositif de changement de vitesse (92).

7. Module électrique d'entraînement d'essieu selon la revendication 6, **caractérisé en ce que** le dispositif de changement de vitesse (92) est disposé sur le côté de la machine électrique (40) situé à l'opposé de l'engrenage différentiel (50).

8. Module électrique d'entraînement d'essieu selon l'une quelconque des revendications 3 à 7, **caractérisé en ce qu'**un deuxième étage de transmission (104) est disposé sur le même côté que l'engrenage différentiel (50), dans la direction de l'essieu.

9. Module électrique d'entraînement d'essieu selon l'une quelconque des revendications 6 à 8, **caractérisé en ce que** le dispositif de changement de vitesse (92) est conçu pour commuter alternativement un (104) des étages de transmission (78, 104) ou au moins deux des étages de transmission en série dans le flux de puissance.

10. Module électrique d'entraînement d'essieu selon l'une quelconque des revendications 6 à 9, **caractérisé en ce qu'**un premier étage de transmission (78) est un agencement d'étages à roues droites (78) avec un arbre intermédiaire (80), qui est disposé parallèlement à l'essieu (16), dans lequel le dispositif de changement de vitesse (92) est associé à l'étage à roues droites (78).

11. Module électrique d'entraînement d'essieu selon l'une quelconque des revendications 6 à 10, **caractérisé en ce que** le dispositif de changement de vitesse (92) est un dispositif de changement de vitesse électromagnétique (92).

12. Module électrique d'entraînement d'essieu selon l'une quelconque des revendications 6 à 11, **caractérisé en ce que** le dispositif de changement de vitesse (92) présente une position neutre, dans laquelle le dispositif de transmission (46; 78, 104) est découplé de la machine électrique (40).

**13.** Module électrique d'entraînement d'essieu selon l'une quelconque des revendications 1 ou 2, **caractérisé en ce que** le dispositif de transmission (46) présente un étage de transmission unique (46).

**14.** Module électrique d'entraînement d'essieu selon l'une quelconque des revendications 1 à 13, **caractérisé en ce que** la machine électrique (40), le dispositif de transmission (46; 78, 104) et l'engrenage différentiel (50) sont fixés sur un support commun (60), qui peut être monté sur une carrosserie de véhicule (24).

**15.** Module électrique d'entraînement d'essieu selon l'une quelconque des revendications 1 à 14, **caractérisé en ce que** l'engrenage différentiel (50) comprend un engrenage différentiel à roues planétaires.

Fig.1

Fig.2

Fig.3

**EP 2 064 081 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19524524 A1